# EUROPEAN PATENT APPLICATION

(11) **EP 3 037 169 A1**
(43) Date of publication of application: **29.06.2016**
(21) Application number: 15199950.5
(22) Date of filing: 14.12.2015
(51) Int. Cl.: B03B 5/00, B03D 1/02, B03D 1/16, C03C 1/02, B09C 1/00

(54) **WET ATTRITION APPARATUS AND METHOD**

(30) Priority: 22.12.2014 GB 201423003
(71) Applicant: CDE Global Limited, County Tyrone BT80 9DG (GB)
(72) Inventor: CONVERY, Anthony, Moneymore, County Londonderry BT45 7NG (GB)
(74) Representative: Waller, Stephen

(57) **Abstract**

A materials processing apparatus for the wet attrition of particulate material, said apparatus comprising at least one mixing chamber having at least one pair of opposing impeller blades or paddles arranged to direct material in opposing directions to facilitate the attrition process, and drive means for driving said impeller blades or paddles, the apparatus including means for fluidising material within the at least one mixing chamber prior to operation of the drive means, wherein said fluidising means comprises means for adding a fluid to the at least one mixing chamber to fluidise the material contained therein.

## Description

This invention relates to a material processing apparatus and method for the wet attrition of particulate material and in particular to an attrition scrubber for cleaning contaminated particulate material and in particular for removing surface contamination from sand particles and breaking up friable material and clays to facilitate separation of such materials from the sand product, liberating clean particles from the contaminated feed material.

Attrition scrubbers are used for cleaning contaminated particulate material, in particular for delaminating clay from sand particles. The particulate material is typically delivered to the attrition scrubber as a liquid slurry having water content of between 20% and 25%. Typically attrition scrubbers, comprise several attrition cells, often known as an attrition cluster, each cell having two or more sets of impellers mounted on a common shaft driven by a respective drive motor, typically an electric motor, such that the movement of the blades of the impellers cause intense scrubbing, polishing and disintegration of the particulate material located within each cell.

A problem with known attrition scrubbers is that solids material in the feed slurry tends to settle out of suspension within the cells when the attrition scrubber is not in operation, for example if the motor of one or more of the cells is stopped due to a fault oR other problem. Therefore a very high starting torque is typically required to initially fluidise the solids material, requiring large drive motors when the motor is restarted. Also the blades and other moving components of the attrition scrubber must be made designed to withstand the initial high starting torque applied to the blades by the motors during start up, making the apparatus very heavy and expensive.

According to the present invention there is provided a materials processing apparatus for the wet attrition of particulate material as claimed in claim 1.

In a preferred embodiment said fluidising means comprises means for adding a liquid to the at least one mixing chamber. Alternatively, said fluidising means may comprise means for adding a gas to the at least one mixing chamber.

Preferably said fluidising means comprises one or more nozzles or jets located with said one or more mixing chambers arranged to direct said fluid into the at least one mixing chamber. The one or more nozzles or jet may be located in a lower region of the at least one mixing chamber

A plurality of mixing chambers may be provided, each mixing chamber having one or more impeller blades or paddles rotatably mounted therein, and drive means for driving said blades or paddles and including fluidising means for adding fluid to the respective mixing chamber to fluidise the material contained therein prior to operation of the respective drive means, wherein control means are provided for controlling operation of the fluidising means in a predetermined sequence. The mixing chambers may be coupled together in series such that material passes through the mixing chambers in turn, the control means operating the fluidising means in each mixing chamber in turn starting with the fluidising means of the most downstream mixing chamber and finishing with the fluidising means of the most upstream mixing chamber. The control means may be programmed to start the drive means of the mixing chambers consecutively in a predetermined sequence starting with the drive means of the most downstream mixing chamber and finishing with the drive means of the most upstream mixing chamber, such that the one or more impeller paddles or blades of the downstream mixing chambers are started before those of the upstream mixing chambers.

In accordance with a further aspect of the present invention there is provided a method of operating a materials processing apparatus for the wet attrition of particulate material as claimed in claim 9.

The step of fluidising material within the at least one mixing chamber may comprise adding a liquid to the at least one mixing chamber via one or more nozzles or jets located within the at least one mixing chamber. Alternatively the step of fluidising solids material within the at least one mixing chamber may comprise adding a gas to the at least one mixing chamber via one or more nozzles or jets located within the at least one mixing chamber.

In a further aspect, the present invention provides a method of operating an attrition cell cluster comprising a plurality of cells as claimed in claim 12.

The plurality of cells may be coupled in series such that material passes through the cells consecutively, said method comprising adding a fluid to each cell consecutively to fluidise the material therein, starting from the most downstream cell and finishing with the most upstream cell.

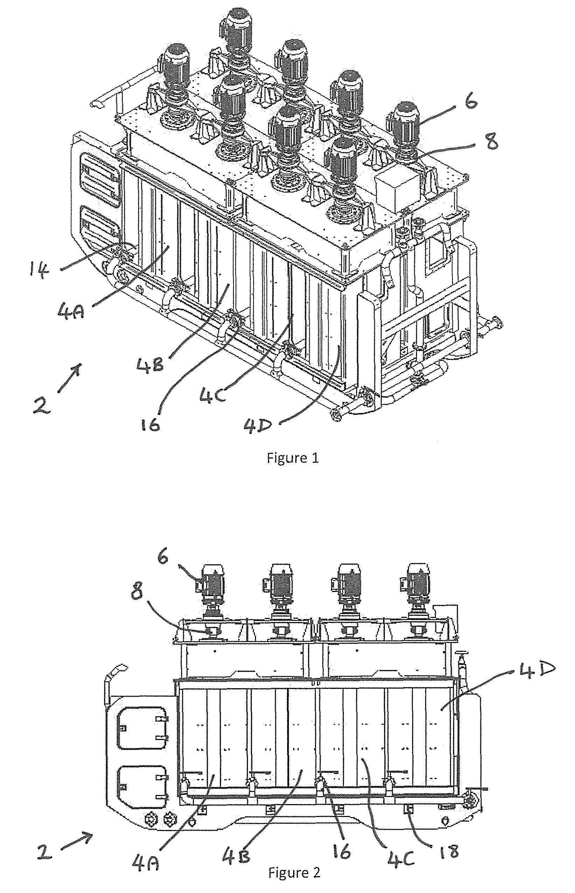

An attrition scrubber in accordance with an embodiment of the present invention will now be described, by way of example only, with reference to the accompanying drawings, in which :-
Figure 1 is a perspective view of an attrition scrubber in accordance with an embodiment of the present invention;
Figure 2 is a side view of the apparatus of Figure 1;

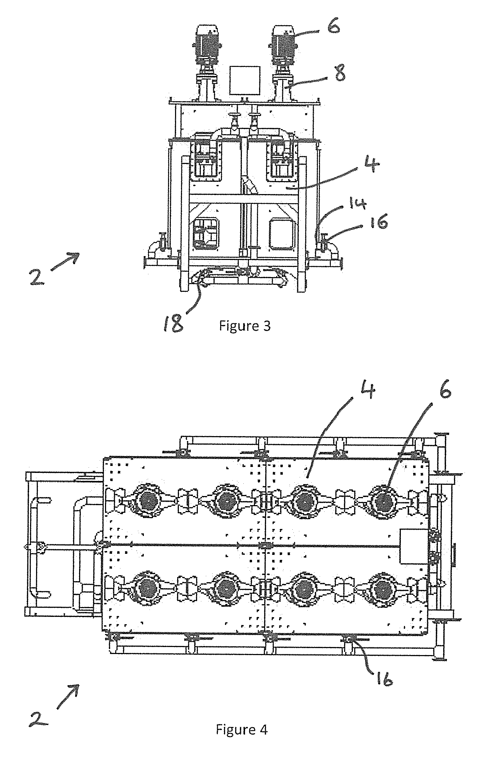

Figure 3 is an end view of the apparatus of Figure 1;
Figure 4 is a plan view of the apparatus of Figure 1 from above;

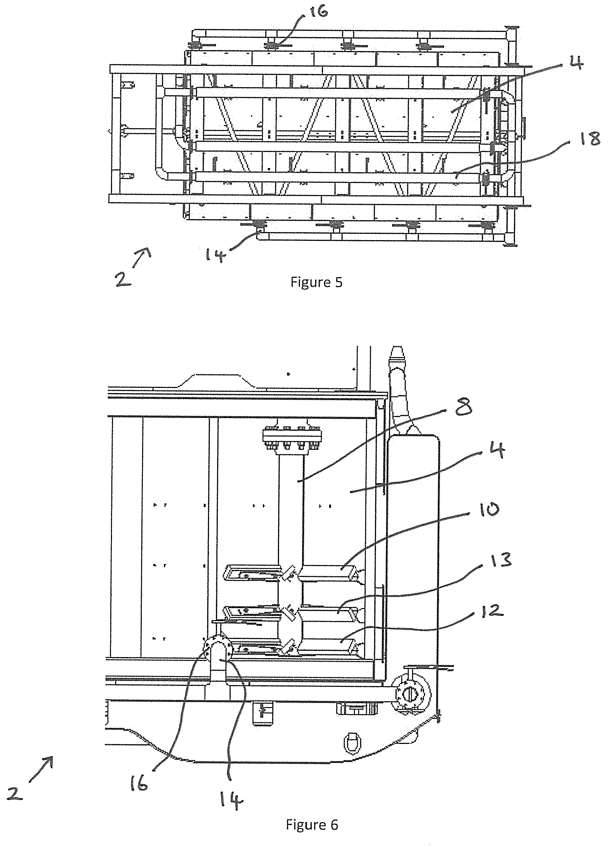

Figure 5 is a plan view of the apparatus of Figure 1 from below; and
Figure 6 is a part sectional detailed view of the apparatus of Figure 1.

As can be seen from the drawings, an attrition cell cluster 2 in accordance with an embodiment of the present invention comprises a plurality of cells 4, eight cells in the example shown arranged in two banks of four, each cell comprising a chamber for holding an aqueous slurry of particulate material, each cell 4 having an electric drive motor 6 mounted at an upper end thereof, the drive motor 6 being coupled to a vertically extending drive shaft 8 extending into the respective cell 4 and having three sets of impeller paddles 10,12,13 mounted thereon, two of said sets of paddles 10,12 being arranged to direct material in an upwards direction while an intermediate third set of paddles 13 is arranged to direct material in a downwards direction to facilitate attrition if the material.

The drive motor 6 of each cell 4 can be powered to rotate the respective drive shaft 8 and thus move the respective sets of impeller paddles 10,12,13 through the sand or other particulate material slurry contained within each cell 4, causing particles of said particulate material to act against one another, whereby intense scrubbing, polishing and disintegration of the particulate material located within each cell 4.

Openings (not shown) are provided between the cells 4 in each bank at alternating locations between upper and lower ends of adjacent cells so that material must pass through all of the cells of each bank of cells 4A,4B,4C,4D in series, preferably passing vertically though each cell between the openings.

Typically, with known attrition scrubbers, should one or more of the attrition cells 4 become choked with material, stalling the motor thereof, or should one or more of the motors fail, or if the attrition scrubber is stopped due to some other fault or emergency, the solid material within each cell 4 tends to fall out of suspension. Thus a greatly increased torque may need to be imparted by the motors to the impeller paddles 10,12,13 to re-fluidise the solid material within each cell. This may prevent one or more of the cells 4 from restarting without the need to remove components and remove the solid material manually.

Even during normal start up of the attrition cell cluster 2, it is normally necessary to apply a significant starting torque to the impeller paddles 10,12,13 in each attrition cell to initially fluidise the particulate material as the solid material in the aqueous slurry tends to settle out of suspension within each cell. Thus the drive motors 6 normally need to be large enough to generate this starting torque and the drive shafts 8, impeller paddles 10,12,13 and their mountings need to be substantial enough to withstand this starting torque.

The attrition cell cluster 2 in accordance with the present invention solves this problem by providing a starting regime which avoids the need for such large starting torque by providing an alternative means for initially fluidising the slurry.

Each attrition cell 4 includes one or more water outlet nozzles 14, preferably located in a lower region thereof, connected to a water supply, whereby water may be supplied into each cell 4 under the control of a controller. The or each water outlet nozzle 14 may be located tangentially within the respective cell at the level of the bottom most impeller paddle 12, preferably directed in the normal direction of rotation of the paddles 10,12,13. Additionally, or alternatively, one or more water outlet nozzles may be located in a base of the respective cell 14 to direct water upwardly into the cell to fluidise material therein.

Preferably the or each outlet nozzle 14 in each cell is connected to the water supply via a respective valve 16, whereby the water supply to the or each nozzle 14 in each cell 4 can be controlled independently by the controller. The controller is also programmed to control the operation of the drive motor 6 of each cell 4.

In a preferred embodiment the controller is programmed to supply water to the or each water outlet nozzle 14 in each cell 4 of the attrition cluster 2 and to initiate operation of the drive motor 6 of each cell 4 under a control algorithm adapted to avoid the need for a high start up torque, as will be described below.

The controller is programmed to supply water under pressure to the or each water outlet nozzle 14 of each cell 4 to fluidise particulate material within the respective cell 4 before the respective drive motor 6 is energised to rotate the paddles 10,12.

Preferably the controller is programmed to initiate the supply of water to the or each water outlet nozzle 14 of each cell in turn, preferably starting from the downstream most cell 4D and finishing with the upstream most cell 4A (in terms of the direction of flow of the slurry, through the attrition cluster) to fluidise the material therein consecutively starting with the downstream most cell 4D.

The controller may also be programmed to start the drive motor 6 of each cell 4A,4B,4C,4D in turn consecutively, starting from the most downstream cell 4D and finishing with the most upstream cell 4A such that the impellers of the downstream cells start rotation before those of the upstream cells. The controller may be programmed to monitor the torque applied by each motor 6 and to repeat the water supply step if the motor torque exceeds a predetermined maximum. In one embodiment the controller may monitor the current applied to the respective motor 6 and may switch the motor off and repeat the step of supplying water to the respective outlet nozzle 14 of the cell if the current applied to the motor 6 exceeds a predetermined maximum during start up of the motor 6.

Such process may be repeated up to a maximum of four times, whereafter an error state may be flagged to indicate that there is a fault with the respective cell. Alternatively, if the motor is still not able to turn the impeller paddles of one or more of the cells 4, a drain outlet 18 of said one or more cells 4 may be opened and the water outlet nozzle 14 thereof may be used to flush material out of said one or more cells 4. The drain outlets 18 may also be adapted to supply water into each cell to fluidise material therein, as well as flushing material from the respective cell.

The controller may comprise a PLC (programmable logic controller), controlling the operation of the drive motors, monitoring the torque applied by the drive motors 6 and controlling motorised or pneumatically operated valves 16 to control the supply of water to the or each water outlet nozzle 14 and/or drain outlet 18 in each cell as required.

In use, particulate material (e.g. sand) in an aqueous slurry is passed into the attrition cell cluster 2, entering the upstream most cells 4A. Within the cells 4, the impeller paddles 10,12,13, driven by the respective drive motors 6, cause intense scrubbing, polishing and disintegration of the sand, delaminating clay, graphite and other contaminants from the sand grains.

The water content of the product entering the cells 4 of the attrition cell cluster 2 is preferably controlled to obtain a water content of 20% to 25% (adding water to the product to achieve the desired water content) during normal operation of the cluster 2 to ensure optimum operation of the attrition cell cluster 2. This may be achieved by monitoring the torque load applied to the impeller paddles 10,12,13 by the drive motor 6 of the upstream most cells 4A of the attrition cell cluster 2, or the current applied to the respective motor 6, during operation of the attrition cell cluster 2 and adding water as necessary, either via said water outlet nozzles 14 or via other water supply means, for example a water supply associated with the feed means of the attrition cell cluster, to achieve the desired optimum water content, resulting in maximum attrition of the sand.

The slurry discharged from the attrition cell cluster 2 may be fed into a sump or tank adjacent and downstream of the attrition cell cluster 2. Fresh water may be added to the slurry in the sump to achieve the correct concentration for a subsequent pumping process (typically 350g/l). A centrifugal slurry pump may be then used to feed the slurry into a set of hydro-cyclones provided downstream of the attrition cluster for removing the very fine material (clay and other contaminants) separated from the sand grains in the attrition process.

The invention is not limited to the embodiment(s) described herein but can be amended or modified without departing from the scope of the present invention.

## Claims

1. A materials processing apparatus for the wet attrition of particulate material, said apparatus comprising at least one mixing chamber (4) having at least one pair of opposing impeller blades or paddles (10,12,13) arranged to direct material in opposing directions to facilitate the attrition process, and drive means (6) for driving said blades or paddles, the apparatus including means for fluidising material within the at least one mixing chamber (4) prior to operation of the drive means (6), wherein said fluidising means comprises means (14) for adding a fluid to the at least one mixing chamber to fluidise the material contained therein.

2. An apparatus as claimed in claim 1, wherein said fluidising means comprises means (14) for adding a liquid to the at least one mixing chamber.

3. An apparatus as claimed in claim 1, wherein said fluidising means comprises means for adding a gas to the at least one mixing chamber.

4. An apparatus as claimed in any preceding claim, wherein said fluidising means comprises one or more nozzles or jets (14) located with said one or more mixing chambers (4) arranged to direct said fluid into the at least one mixing chamber.

5. An apparatus as claimed in claim 4, wherein said one or more nozzles or jets (14) are located in a lower region of the at least one mixing chamber (4).

6. An apparatus as claimed in any preceding claim, comprising a plurality of mixing chambers, each mixing chamber (4) having at least one pair of opposing blades or paddles (10,12,13) rotatably mounted therein to direct material in opposing directions to facilitate the attrition process, and drive means (6) for driving said blades or paddles (10,12,13) and including fluidising means (14) for adding fluid to the respective mixing chamber to fluidise the material contained therein prior to operation of the respective drive means, wherein control means are provided for controlling operation of the fluidising means (14) in a predetermined sequence.

7. An apparatus as claimed in claim 6, wherein the mixing chambers (4) are coupled together in series such that material passes through the mixing chambers in turn, the control means operating the fluidising means (14) in each mixing chamber in turn starting with the fluidising means of the most downstream mixing chamber and finishing with the fluidising means of the most upstream mixing chamber.

8. An apparatus as claimed in claim 7, wherein the control means is programmed to start the drive means (6) of the mixing chambers consecutively in a predetermined sequence starting with the drive means (6) of the most downstream mixing chamber and finishing with the drive means of the most upstream mixing chamber, such that the one or more impeller paddles or blades of the downstream mixing chambers are started before those of the upstream mixing chambers.

9. A method of operating a materials processing apparatus for the wet attrition of particulate material, said apparatus comprising at least one mixing chamber (4) having at least one pair of opposing blades or paddles (10,12,13) arranged to direct material in opposing directions to facilitate the attrition process, and drive means (6) for driving said blades or paddles, the method comprising the step of fluidising material within the at least one mixing chamber (4) prior to operation of the drive means (6) of the blades or paddles (10,12,13).

10. A method as claimed in claim 9, wherein the step of fluidising material within the at least one mixing chamber (4) comprises adding a liquid to the at least one mixing chamber via one or more nozzles or jets (14) located within the at least one mixing chamber (4).

11. A method as claimed in claim 9, wherein the step of fluidising solids material within the at least one mixing chamber comprises adding a gas to the at least one mixing chamber via one or more nozzles or jets located within the at least one mixing chamber.

12. A method of operating an attrition cell cluster comprising a plurality of cells, each cell comprising a chamber (4) for holding an aqueous slurry of particulate material, each cell having at least one pair of opposing impeller blades or paddles (10,12,13) rotatably driven by a respective drive means (6) and arranged to direct material in opposing directions to facilitate the attrition process, the method comprising adding a fluid to each cell in turn to fluidise the material contained therein at consecutive intervals prior to operating the drive means (6) of the impeller blades or paddles or each cell.

13. A method as claimed in claim 12, wherein said plurality of cells are coupled in series such that material passes through the cells consecutively, said method comprising adding a fluid to each cell (4) consecutively to fluidise the material therein, starting from the most downstream cell and finishing with the most upstream cell.
